# EUROPEAN PATENT SPECIFICATION

(11) **EP 2 198 567 B1**
(45) Date of publication and mention of the grant of the patent: **15.01.2014**
(21) Application number: 07800157.5
(22) Date of filing: 28.08.2007
(51) Int. Cl.: H04L 12/46, H04L 12/44, H04L 29/08

(54) **METHOD FOR SWITCHING FROM A DISTRIBUTED PRINCIPLE TO A MASTER-SLAVE PRINCIPLE IN A NETWORK**
VERFAHREN ZUM WECHSELN VON EINEM VERTEILTEN PRINZIP ZU EINEM MASTER-SLAVE-PRINZIP IN EINEM NETZWERK
PROCÉDÉ POUR COMMUTER D'UN PRINCIPE DISTRIBUÉ À UN PRINCIPE MAÎTRE-ESCLAVE DANS UN RÉSEAU

(43) Date of publication of application: 23.06.2010
(73) Proprietor: TTTech Computertechnik AG, 1040 Wien (AT)
(72) Inventor: POLEDNA, Stefan, A-3400 Klosterneuburg (AT); SCHWARZ, Martin, A-1050 Wien (AT); BAUER, Guenther, A-1070 Wien (AT); STEINER, Wilfried, A-2225 Zistersdorf (AT); HALL, Brendan, Eden Prairie, MN 55344 (US); PAULITSCH, Michael, Fridley, MN 55421 (US)
(74) Representative: Matschnig, Franz
(86) International application number: PCT/AT2007/000412
(87) International publication number: WO 2009/026597

(56) References cited:
- DE-A1-102005 018 837
- GB-A- 2 404 121
- US-A1- 2003 093 727
- US-A1- 2005 254 518
- US-A1- 2006 130 049
- US-A1- 2007 112 446
- KEVIN DOWNES; MERILEE FORD; H. KIM LEW; STEVE SPANIER; TIM STEVENSON: "Internetworking Technologies Handbook, Second Edition" 31 December 1998 (1998-12-31), CISCO PRESS , MACMILLAN TECHNICAL PUBLISHING, INDIANAPOLIS, IN, USA , XP002478657 page 334 - page 342
- UNKOWN: "Gateway (Computer)" WIKIPEDIA, [Online] 22 July 2007 (2007-07-22), XP002478478 Internet Retrieved from the Internet: URL:http://de.wikipedia.org/w/index.php?ti tle=Gateway_%28Computer%29&direction=prev& oldid=36046834> [retrieved on 2008-04-16]
- MARKUS JOCHIM: "Zeitig steuern - Sichere Datenuebertragung im Automobil", C'T MAGAZIN FUER COMPUTERTECHNIK, vol. 2, 1 January 2007 (2007-01-01), pages 190-195, XP001526155, Heise Verlag, Hannover

## Description

The invention relates to a method for switching from a distributed principle to a master-slave principle in a network, wherein the network is consisting of a number of end systems, and wherein the end systems are capable of exchanging information in the form of messages, and wherein the end systems are designed to realize a system level function according to the distributed principle, e.g. according to the distributed synchronization principle.

Furthermore the invention relates to a concentrator device for a network which is consisting of a number of end systems, wherein the end systems are capable of exchanging information in the form of messages, and wherein the concentrator device, for switching from a distributed principle to a master-slave principle in the network, and wherein the end systems are designed to realize a system level function according to the distributed principle, e.g. according to the distributed synchronization principle.

The invention also relates to a starcoupler for a network which is consisting of a number of end systems, wherein the end systems are capable of exchanging information in the form of messages, and wherein the end systems are connected via starcouplers, and wherein at least one concentrator device according is part of the starcoupler.

Finally the invention relates to an integrated device which contains amongst other things an above mentioned starcoupler and to a network comprising at least a concentrator device, and/or a starcoupler and/or an integrated device.

A computer network consists of end systems and communication channels. The end systems are able to communicate with each other by sending and receiving messages using the communication channels. Furthermore, an end system is characterized in such that each of the end systems maintains a local clock.

In such a computer network a system level function can be realized by the interaction of multiple end systems. An example of such a system level function is the synchronization function. The synchronization function comprises all variants of functionality that aims at bringing the local clocks of the end systems into close agreement. We use the synchronization function as illustrating example in this documentation.

The synchronization function can implement a master-slave principle or a distributed principle.
- In the master-slave principle a single end system is the source of the time information. All other end systems act as slave end systems which accept the time information and set their local clock in respect to the time values received from the master.
- In the distributed principle more than one end system provide time information. In this case each end system collects the timing information of the different end systems that transmit time information in a first step. In a second step each end system applies a convergence function on the collected time information. Such a convergence function can be for example the average function or the fault-tolerant midpoint function. In a third step each end system corrects its local clock for the calculated term from the second step.

The master-slave principle is attractive due to its simplicity: the master sends a synchronization message with a fixed period and all slaves adjust their local clocks with respect to this synchronization message. A synchronization function that is based on a master-slave principle can be made fault-tolerant by replication of the master as another computer at the system level or by a high-integrity design of a single master computer, which may be based on redundant components within the design of that master computer. Replication of the master computer ensures that there is still a master that sources time information in case a master or a set of masters is lost. The replication establishes availability of the synchronization function therefore.

The high-integrity design is an accepted process in industry to restrict the failure behavior of a faulty component to a sufficient degree. The high-integrity design of the master or masters establishes integrity of the synchronization therefore. The drawback of this approach to fault-tolerance is usually an increased cost of the component that is designed to be high-integrity.

The distributed principle is attractive from a fault-tolerance point of view. If a single end system or a set of end systems becomes faulty and transmits faulty synchronization messages, the impact on the synchronization function is bounded by the convergence function. One key result of the background literature on fault-tolerant distributed functions is that for k faulty end systems there are 3*k+1 correct end systems required to tolerate k arbitrary faulty end systems. If this equation is respected, it can be guaranteed that the worst case deviation of any two non-faulty local clocks in the system will not exceed a specified value. The drawback of the distributed principle is the algorithmic complexity compared to the master-slave principle.

It is a major design decision whether to use a master-slave principle or a distribute principle, or both principles in cooperation to realize system level functions. Components that are designed according to one of these principles cannot per se (that means without changes) operate according the other principle.

The invention has for its object to present a conversion strategy from a distributed principle to a master-slave principle for system level functions while being backward compatible to the distributed principle.

For this purpose at least one concentrator device is used in the above mentioned method, wherein the at least one concentrator device is provided in the network and wherein the at least one concentrator device
a) is capable of manipulating arbitrary messages of one or more protocol layers received of an end system before relaying said message, with or without manipulation, to the end systems,
   and/or
b) is capable of generating arbitrary messages of one or more protocol layers, which messages are relayed to the end systems, and wherein the messages relayed by the concentrator device are used in the end systems for realizing at least one system level function, for example for the synchronization of the local clocks. The end systems are connected via at least one starcoupler and according to the invention the at least one concentrator device is part of at least one starcoupler.

Further advantageous realizations of the method according to the invention and of the different devices (concentrator device, starcoupler, integrated device) and the network as claimed may comprise one or more of the following features:
- the arbitrary messages of one or more protocol layers may be manipulated, independently if said messages are faulty or not;
- all messages sent by the end systems are routed via the at least one starcoupler;
- the messages generated by the at least one concentrator device are generated with a fixed period;
- the at least one starcoupler which contains the at least one concentrator device is adapted to perform a guardian function;
- the starcoupler which contains the at least one concentrator device and an external component, which external component is adapted to realize another network protocol, both are integrated into an integrated device; the external component realizes another protocol than the starcoupler. This realization makes it possible to connect for example a FlexRay network to an Ethernet network such that the FlexRay and Ethernet end systems may communicate with each other.
- the integrated device is adapted to provide a gateway function that allows to transform messages from one network protocol to another network protocol and vice versa, and wherein the starcoupler is adapted to relay the transformed messages to the end systems and to relay messages from the end systems to the external component. The gateway function converts messages from the external component to the starcoupler and from the starcoupler to the external component. In principle, this function could also be provided by the concentrator device (converting an Ethernet message into a FlexRay message and relaying the message (= generating message), or writing the content of an Ethernet messages into an existing FlexRay message (= message manipulation)). This means that the concentrator device in this case is extended with a gateway functionality, that allows the data exchange between an external component and the starcoupler.
- the integrated device is adapted to provide a temporal gateway function, such that the local clock of the starcoupler can be synchronized by the external component;
- the end systems are FlexRay end systems and the external component is an Ethernet starcoupler, and wherein the gateway function translates FlexRay messages to Ethernet Messages and vice versa;
- the messages generated by the at least one concentrator device are either FlexRay messages or FlexRay Communication Symbols;
- the messages generated by the concentrator device are TTP messages;
- in case of a replicated network that consists of two replicas, the starcouplers which contain concentrator devices are connected directly via interlinks;
- in case of a replicated network consisting of more than two replicas, the starcouplers that host/contain the concentrator devices are connected via interlinks that form an unidirectional ring; each starcoupler and its copy/copies exchange information via the so-called interlinks.
- in case of a replicated network the starcouplers send synchronization messages also via the interlinks;
- messages generated and/or manipulated by the at least one concentrator device may be used for synchronization of the local clocks in attached starcouplers;
- the at least one starcoupler is designed according to a high-integrity design strategy.
- In a network according to the invention the end systems are connected via at least one starcoupler as mentioned above; preferably at least one integrated device is provided in the network; preferably the end systems are FlexRay end systems and the external component is an Ethernet starcoupler, and wherein the gateway function translates FlexRay messages to Ethernet Messages and vice versa.

Modern communication protocols are realized in layers. One layering approach is given in the OSI reference model on which the standard internet communication protocol is based on. Layering a protocol has the main purpose to group functionality, for example, while the lowest layer may only specify the access scheme to the physical communication medium, higher protocol layers can realize an acknowledgment service in which a receiver of a message will send an acknowledgment message back to the sender of the original message to inform the sender of a correct reception, or of a failed reception. The invention described in this application is agnostic to the protocol layer and as such can realize the conversion from the distributed to the master-slave principle on any of these layers, even concurrently on different layers.

A system level function is a function in which components (in our case end systems or starcouplers) in the system interact with each other. Examples for system level functions are: clock synchronization function, diagnosis function, maintenance function, startup and restart functions, consensus function, etc.

The innovation covers a method and concentrator device that can be used to realize this conversion strategy.

The basic method of the conversion strategy is a simulation of the distributed principle, in which the concentrator device generates all messages related to a distributed system level function that would otherwise be produced by a set of distinct active nodes. In both principles these messages are sourced by a potentially larger set of passive end systems. In case of the synchronization function as discussed above, the concentrator device sources all synchronization messages. For example, if the distributed function requires four end systems to generate one synchronization message each, then the conversion strategy causes the concentrator device to generate the respective synchronization messages itself. This generation process can be realized in different ways:
- In one realization of the conversion strategy the end systems that source synchronization messages can be reconfigured such they will no longer source synchronization messages. Alternatively, the concentrator device may change a synchronization message sourced by an end system such that it will not be identified as synchronization message by any receiver. In both cases the concentrator device will produce newly introduced synchronization messages of its own.
- In another realization, the concentrator device will delay the synchronization messages sourced by the end systems to appropriate points in time. The concentrator device would overriding any timing information received from the end system, but does not create any new messages.

The concentrator device may be implemented as part of the communication channels which enables a complete reuse of existing end system components. For example, if the computer network is connected in star topology the concentrator device will be part of the centralized switching device.

The fault-tolerance capabilities of the distributed principle may be maintained by designing the concentrator device as a high-integrity device and/or installing replicated concentrator devices. The high-integrity design ensures integrity, while the replication ensures availability of the system function.

The innovation gives a significant economic benefit as components that have been produced according the distributed principle can fully be reused. Especially, if the components are realized as ASICs it is a major economic loss, if a redesign of the components is necessary. Furthermore, design flaws in wide-spread and inexpensive ASIC implementations of micro-controllers implementing the more complex distributed principle, can be mitigated by moving the burden to solve certain problems into the domain of the single concentrator device, which may be more amenable for modification.

The innovation also allows a simple realization of a central bus guardian function in the starcoupler. The central bus guardian function is a mechanism that controls the transmission timing of messages from end systems. The central bus guardian function is implemented to protect against faulty end systems that violate their temporal transmission specification. As the concentrator device is the source of the time information, and this time information is distributed to the end systems, it does not have to synchronize to the end systems. Hence, the central bus guardian design does not have to implement a synchronization function. This reduction in the central bus guardian complexity gives a significant economic benefit, especially if such a central guardian function is developed according certification standards as for example used in civil aerospace applications.

The innovation also allows the realization of a gateway function if the concentrator device is integrated with an external component (starcoupler or end system) that executes a different protocol. As the concentrator device is synchronized it can also generate messages that hold the payload data of the messages received by the external component. This is again a significant economic benefit which renders additional gateway components obsolete. This reduces hardware cost and development overhead.

If the concentrator device interfaces between N time-triggered networks, sourcing time from one of these networks and serving time as master in the remaining N-1 of these networks, the present innovation allows to extend the global notion of time present in the master network into all of the client networks, which may execute entirely different time-triggered protocols. In contrast to prior multi-cluster clock synchronization algorithms for time-triggered systems (M. Paulitsch, "Fault-Tolerant Clock Synchronization for Embedded Distributed Multi-Cluster Systems", Doctoral Thesis, Institut für Technische Informatik, TU Wien, September 2002), the present invention removes the distinction between internal and external clock synchronization algorithms. The present invention is capable of establishing a single internal synchronization domain across multiple time-triggered networking technologies.

Until now prior simulation techniques have been primarily used for the realization of development and test equipment in order to substitute missing, faulty or complex end systems. In contrast to this with the method and the devices according to the presented invention it is possible to simulate entire network service classes in order to replace either existing but inadequate functionality with more dependable implementations targeted for deployment in field.

The invention is described in more detail hereinbelow with reference to the drawing in which:
- Fig. 1: depicts a distributed computer system consisting of six end systems,
- Fig. 2: depicts the internal structure of a starcoupler,
- Fig. 3: depicts an integrated device, and
- Fig. 4: depicts a high-integrity design for the starcoupler.

The following paragraphs describe one possible realization of the innovation. The realization is described based on an example system of six end systems 202 - 207 and one starcoupler 201.

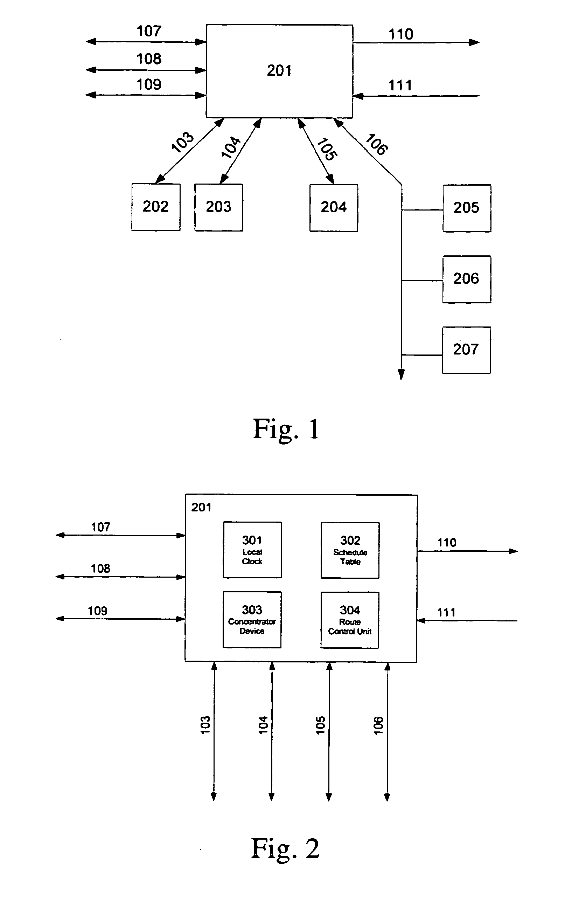

Fig. 1 depicts a distributed computer system consisting of six end systems 202 - 207 that are connected to a starcoupler 201. The connection between each end system 202 - 207 and the starcoupler 201 are a bi-directional communication links 103 - 106, where each communication link may connect a single end system (in case of communication links 103 - 105) or a network of end systems (in case of communication link 106) to the starcoupler 201.

The starcoupler 201 can be connected to another starcoupler or starcouplers via the communication links 107 - 109. The communication links 107 - 109 are also bi-directional communication links. Using the communication links 107 - 109 the starcouplers can form an arbitrary tree topology.

The starcoupler 201 can be connected to another starcoupler or starcouplers in case of replicated communication channels. For the connection to the replicated communication channel the starcoupler uses two uni-directional communication links 110, for the transmission of data to the replicated communication channel, and the communication link 111, for reception of data from the replicated communication channel. The communication links 110 and 111 are referred to as the "interlinks".

Fig. 2 depicts the internal structure of a starcoupler 201. Basic building blocks of the starcoupler are the Local Clock 301, the Schedule Table 302, the Concentrator Device 303, and the Route Control Unit 304.

The Local Clock 301 is used as a reference to time for the time-triggered traffic.

The Schedule Table 302 stores the relay points in time of messages that are generated by the concentrator device 303. In the simplest form the schedule table will hold only one entry. In this case the messages generated by the concentrator device 303 are relayed with this period. The schedule table optionally may also store the arrival and/or relay times of time-triggered messages that are generated by end systems 202 - 207. This information can be used for a guardian function. Guardian function means that the starcoupler 201 will only relay a message that is dispatched by an end system 202 - 207, if this message arrives at the starcoupler within a constant time-interval around the arrival point in time in the schedule table. If a message arrives outside of the specified interval, the message is not relayed and discarded. In this case, the starcoupler 201 may store an error message in an internal log file.

The concentrator device 303 creates messages to simulate messages from end systems, which may be present in the system (end systems 202 - 207) or not. The messages are created such that they are available for transmission by the starcoupler when the local clock 301 indicates that the respective relay point in time, that is stored in the schedule table, is reached. A receiving end system 202 - 207 will qualify messages that are created by the concentrator device 303 as messages that are transmitted by an end system.

The route control unit 304 either manages the relay of a message that is received by an end system 202 - 207 or a message that is created by the concentrator device 303. Hence, this relay is done either from the incoming port or from the concentrator device to a set or a subset of outgoing ports. The route information for all messages or only a subset of messages may also be stored in the schedule table 302.

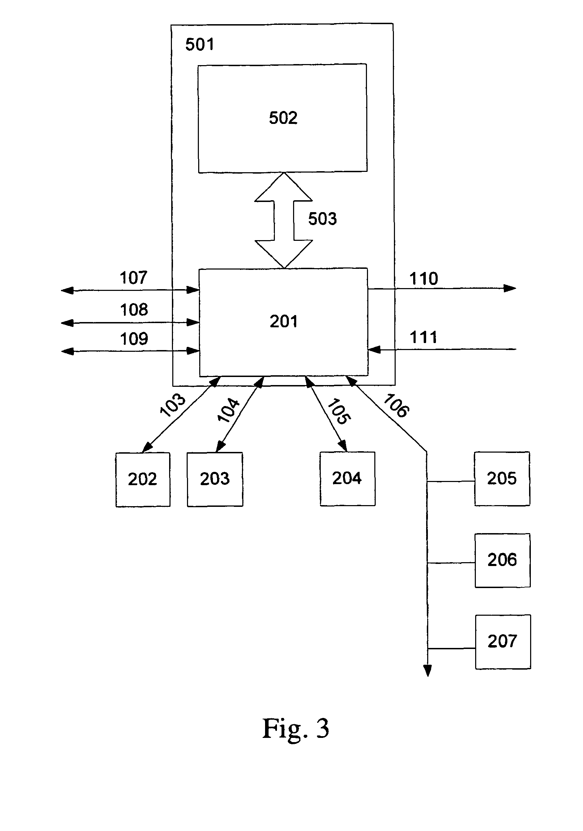

Fig. 3 depicts an integrated device 501 which integrates the starcoupler device 201 with an external device 502. Such an external device may be for example a starcoupler that operates a different protocol or an end system that operates a different protocol than the starcoupler 201. The integrated device 501 also implements a converter function 503 that converts messages of the protocol operated in the external device 502 to messages operated in the starcoupler 201 and vice versa. This way the starcoupler device implements a gateway function for to move data between different network protocols. In addition the local clock 301 in the starcoupler 201 can synchronize to the external component 502. Synchronization messages that are created by the concentrator unit 303 can then spread this synchronization information such that also the end systems 202 - 207 become synchronized to the protocol operated in the external component 502.

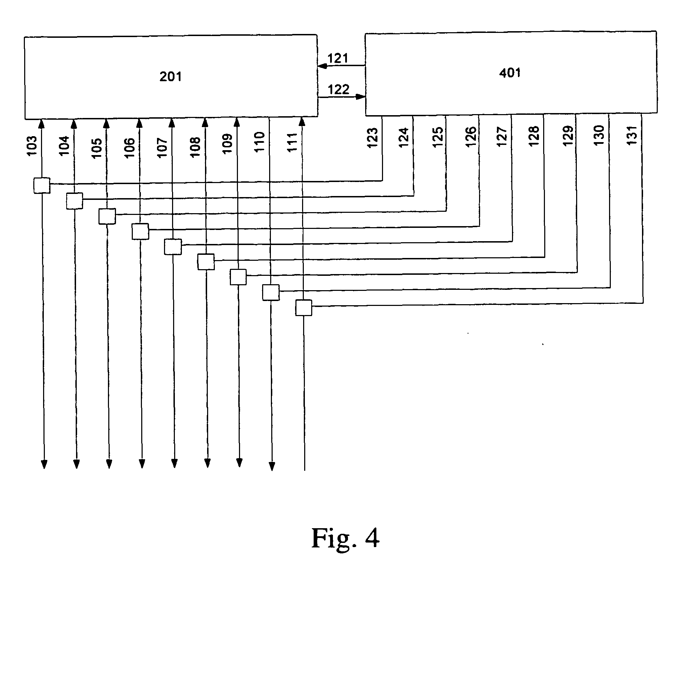

Fig. 4 depicts a high-integrity design for the starcoupler 201 component. The purpose of the high-integrity design is to decrease the probability of undetected failure modes by the starcoupler 201 to an acceptable low threshold. For the high-integrity design a monitoring component 401 is installed that monitors the inputs to the starcoupler 201 and the output of the starcoupler 201 by connecting to the communication links 103 - 106, the links to other starcouplers 107 - 109, and the interlinks 110, 111 via communication links 123 - 131. In addition, the starcoupler 201 is extended by unidirectional communication links 121 and 122 to enable the exchange of internal data between the starcoupler 201 and the monitoring component 401. The monitoring component 401 continually monitors the output of the starcoupler 201. Based on the information that the monitor 401 receives via the communication links 122 - 131, the monitor is able to detect certain failures of the starcoupler 201 that result in faulty messages. If the monitor 401 detects such a faulty message it unambiguously flags this message as faulty.

The innovation presents a strategy and a device that allows the device located at the center of a star topology in a time-triggered network (e.g. "star coupler", or "central (bus) guardian", or "hub") to operate as synchronization master, as gateway between different network protocols, and as partitioning mechanism between network segments (i.e performing a "central bus guardian" function). The functionality of said strategy and device is based on the central device simulating messages of end systems in attached network segments.

## Claims

1. Method for switching from a distributed principle to a master-slave principle in a network, wherein the network is consisting of a number of end systems (202 - 207), wherein the end systems (202 - 207) are exchanging information in the form of messages, wherein the end systems (202 - 207) are connected via at least one starcoupler (201),
and wherein the end systems (202 - 207) are designed to realize a synchronization function according to the distributed principle,
**characterized in that**
a concentrator device (303) is provided in the network, wherein the concentrator device (303) is part of a starcoupler (201), and wherein the concentrator device (303)
a) manipulates arbitrary messages of the synchronization function received from an end system (202 - 207) before relaying said message to the end systems, and/or
b) generates arbitrary messages of the synchronization function, which messages are relayed to the end systems (202 - 207),
and wherein the messages relayed by the concentrator device (303) according to step a) or b) are used in the end systems (202 - 207) for realizing the synchronization function,..

2. Method according to claim 1, wherein the concentrator device (303) generates arbitrary messages of the synchronization function, which messages are relayed to the end systems (202 - 207), **characterized in that** the end systems which source synchronization messages are reconfigured such that they will no longer source synchronization messages.

3. Method according to claim 1, wherein the concentrator device (303) manipulates arbitrary messages of the synchronization function received of an end system (202 - 207) before relaying said message to the end systems, and wherein
-) the concentrator device changes a synchronization message sourced by an end system such that it will not be identified as synchronization message by any receiver, or
-) the concentrator device delays the synchronization messages sourced by the end systems to appropriate points in time, wherein the concentrator device overrides any timing information received from the end system, and wherein the concentrator device does not create any new messages.

4. Method according to one of the claims 1 to 3, wherein the messages generated by the concentrator device (303) are generated with a fixed period.

5. Method according to one of the claims 1 to 4, wherein the starcoupler (201) which contains the concentrator device (303) performs a guardian function.

6. Method according to one of the claims 1 to 5, wherein the starcoupler (201) which contains the concentrator device (303) and an external component (502), which external component (502) realizes another network protocol, both are integrated into an integrated device (501), and wherein said integrated device (501) preferably provides a gateway function (503) that allows to transform messages from one network protocol to another network protocol and vice versa, and wherein the starcoupler (201) preferably relays the transformed messages to the end systems (202 - 207) and relays messages from the end systems (202 - 207) to the external component (502).

7. Method according to claim 6, wherein said integrated device (501) provides a temporal gateway function, such that a local clock (301) of the starcoupler (201) can be synchronized by the external component (502).

8. Method according to one of the claims 1 to 7, wherein in case of a replicated network that consists of two replicas, the starcouplers (201) which contain concentrator devices (303) are connected directly via interlinks (110, 111), and wherein in case of a replicated network consisting of more than two replicas, the starcouplers (201) that host/contain the concentrator devices (303) are connected via interlinks (110, 111) that form an unidirectional ring.

## Patentansprüche

1. Verfahren zum Umschalten von einem distribuierten Prinzip auf ein Master-Slave-Prinzip in einem Netzwerk, wobei das Netzwerk aus einer Anzahl von Endsystemen (202 - 207) besteht, wobei die Endsysteme (202 - 207) Information in Form von Nachrichten austauschen, wobei die Endsysteme (202 - 207) über zumindest einen Sternkoppler (201) verbunden sind,
und wobei die Endsysteme (202 - 207) ausgelegt sind, um eine Synchronisationsfunktion entsprechend dem verteilten Prinzip zu realisieren,
**dadurch gekennzeichnet, dass**
eine Concentrator-Einrichtung (303) in dem Netzwerk bereitgestellt ist, wobei die Concentrator-Einrichtung (303) Teil eines Sternkopplers (201) ist und wobei die Concentrator-Einrichtung (303)
a) beliebige Nachrichten der Synchronisationsfunktion, die von einem Endsystem (202 - 207) empfangen wurden, manipuliert, bevor die genannten Nachrichten an die Endsysteme weitergeleitet werden, und/ oder
b) beliebige Nachrichten der Synchronisationsfunktion generiert, welche Nachrichten an die Endsysteme (202 - 207) weitergeleitet werden,
und wobei die nach Schritt a) oder b) durch die Concentrator-Einrichtung (303) weitergeleiteten Nachrichten in den Endsystemen (202 - 207) zur Realisierung der Synchronisationsfunktion verwendet werden.

2. Verfahren nach Anspruch 1, wobei die Concentrator-Einrichtung (303) beliebige Nachrichten der Synchronisationsfunktion generiert, welche Nachrichten an die Endsysteme (202 - 207) weitergeleitet werden, **dadurch gekennzeichnet, dass** die Endsysteme, die Synchronisationsnachrichten beziehen, rekonfiguriert werden, sodass sie keine Synchronisationsnachrichten mehr beziehen.

3. Verfahren nach Anspruch 1, wobei die Concentrator-Einrichtung (303) beliebige von einem Endsystem (202 - 207) empfangene Nachrichten manipuliert, bevor die genannten Nachrichten an die Endsysteme weitergeleitet werden, und wobei
-) die Concentrator-Einrichtung eine von einem Endsystem bezogene Synchronisationsnachricht derart verändert, dass sie von keinem Empfänger als Synchronisationsnachricht erkannt wird, oder
-) die Concentrator-Einrichtung die von den Endsystemen bezogenen Nachrichten bis zu geeigneten Zeitpunkten verzögert, wobei die Concentrator-Einrichtung jegliche vom Endsystem empfangene Timing-Information übersteuert und wobei die Concentrator-Einrichtung keine neuen Nachrichten erzeugt.

4. Verfahren nach einem der Ansprüche 1 bis 3, wobei die von der Concentrator-Einrichtung (303) generierten Nachrichten mit einer festen Periode generiert werden.

5. Verfahren nach einem der Ansprüche 1 bis 4, wobei der Sternkoppler (201), der die Concentrator-Eirichtung (303) enthält, eine Wächterfunktion ausführt.

6. Verfahren nach einem der Ansprüche 1 bis 5, wobei der Sternkoppler (201), der die Concentrator-Einrichtung (303) enthält und eine externe Komponente (502), welche externe Komponente (502) ein andere Netzwerkprotokoll verwirklicht, beide in eine integrierte Einrichtung (501) integriert sind, und wobei die genannte integrierte Einrichtung (501) bevorzugt eine Gateway-Funktion (503) zur Verfügung stellt, die es gestattet, Nachrichten von einem Netzwerkprotokoll auf ein anderes Netzwerkprotokoll und umgekehrt umzustellen, und wobei der Sternkoppler (201) bevorzugt die umgestellten Nachrichten an die Endsysteme (202 - 207) weiterleitet und Nachrichten von den Endsystemen (202 - 207) an die externe Komponente (502) weiterleitet.

7. Verfahren nach Anspruch 6, wobei die genannte integrierte Komponente (501) eine temporäre Gateway-Funktion zur Verfügung stellt, so dass eine lokale Uhr (301) des Sternkopplers (201) durch die externe Komponente (502) synchronisiert werden kann.

8. Verfahren nach einem der Ansprüche 1 bis 7, wobei im Falle eines gespiegelten Netzwerks, dass aus zwei Spiegelungen besteht, die Sternkoppler (201), die die Concentrator-Einrichtungen (303) enthalten über Interlinks (110, 111) direkt miteinander verbunden sind, und wobei im Falle eines gespiegelten Netzwerks bestehend aus mehr als zwei Spiegelungen die Sternkoppler (201), die die Concentrator-Einrichtungen (303) hosten/enthalten über Interlinks (110, 111) miteinander verbunden sind die einen unidirektionalen Ring bilden.

## Revendications

1. Procédé de commutation d'un principe distribué à un principe maître-esclave dans un réseau, dans lequel le réseau consiste en un certain nombre de systèmes d'extrémité (202 à 207), dans lequel les systèmes d'extrémité (202 à 207) échangent des informations sous la forme de messages, dans lequel les systèmes d'extrémité (202 à 207) sont connectés via au moins un coupleur en étoile (201),
et dans lequel les systèmes d'extrémité (202 à 207) sont conçus pour réaliser une fonction de synchronisation selon le principe distribué,
**caractérisé en ce que**
un dispositif de concentrateur (303) est prévu dans le réseau, dans lequel le dispositif de concentrateur (303) fait partie d'un coupleur en étoile (201), et dans lequel le dispositif de concentrateur (303)
a) manipule des messages arbitraires de la fonction de synchronisation reçus en provenance d'un système d'extrémité (202 à 207) avant de transmettre lesdits messages aux systèmes d'extrémité, et/ou
b) génère des messages arbitraires de la fonction de synchronisation, lesquels messages sont transmis aux systèmes d'extrémité (202 à 207),
et dans lequel les messages transmis par le dispositif de concentrateur (303) selon l'étape a) ou b) sont utilisés dans les systèmes d'extrémité (202 à 207) afin de réaliser la fonction de synchronisation.

2. Procédé selon la revendication 1, dans lequel le dispositif de concentrateur (303) génère des messages arbitraires de la fonction de synchronisation, lesquels messages sont transmis aux systèmes d'extrémité (202 à 207), **caractérisé en ce que** les systèmes d'extrémité qui recherchent la source des messages de synchronisation sont reconfigurés de sorte qu'ils ne vont plus rechercher la source des messages de synchronisation.

3. Procédé selon la revendication 1, dans lequel le dispositif de concentrateur (303) manipule les messages arbitraires de la fonction de synchronisation reçus dans un système d'extrémité (202 à 207) avant de transmettre lesdits messages aux systèmes d'extrémité, et dans lequel
- le dispositif de concentrateur change un message de synchronisation dont la source est recherchée par un système d'extrémité de sorte qu'il ne sera pas identifié comme un message de synchronisation par un récepteur quelconque, ou
- le dispositif de concentrateur retarde les messages de synchronisation dont la source est recherchée par les systèmes d'extrémité en des points appropriés dans le temps, dans lequel le dispositif de concentrateur annule des informations de temporisation quelconques reçues en provenance du système d'extrémité, et dans lequel le dispositif de concentrateur ne crée pas de nouveaux messages.

4. Procédé selon l'une des revendications 1 à 3, dans lequel les messages générés par le dispositif de concentrateur (303) sont générés avec une période fixe.

5. Procédé selon l'une des revendications 1 à 4, dans lequel le coupleur en étoile (201) qui contient le dispositif de concentrateur (303) réalise une fonction de garde.

6. Procédé selon l'une des revendications 1 à 5, dans lequel le coupleur en étoile (201) qui contient le dispositif de concentrateur (303) et un composant externe (502), lequel composant externe (502) réalise un autre protocole de réseau, sont tous deux intégrés dans un dispositif intégré (501), et dans lequel ledit dispositif intégré (501) fournit de préférence une fonction de passerelle (503) qui permet de transformer des messages d'un protocole de réseau en un autre protocole de réseau et vice versa, et dans lequel le coupleur en étoile (201) transmet de préférence les messages transformés aux systèmes d'extrémité (202 à 207) et transmet des messages des systèmes d'extrémité (202 à 207) au composant externe (502).

7. Procédé selon la revendication 6, dans lequel ledit dispositif intégré (501) fournit une fonction de passerelle temporelle, de sorte qu'une horloge locale (301) du coupleur en étoile (201) peut être synchronisée par le composant externe (502).

8. Procédé selon l'une des revendications 1 à 7, dans lequel dans le cas d'un réseau répliqué qui consiste en deux répliques, les coupleurs en étoile (201) qui contiennent les dispositifs de concentrateur (303) sont directement connectés via des interconnexions (110, 111), et dans lequel dans le cas d'un réseau répliqué consistant en plus de deux répliques, les coupleurs en étoile (201) qui hébergent/contiennent les dispositifs de concentrateur (303) sont connectés via des interconnexions (110, 111) qui forment un anneau unidirectionnel.
